# EUROPEAN PATENT SPECIFICATION

(11) **EP 0 818 960 B1**
(45) Date of publication and mention of the grant of the patent: **11.09.2002**
(21) Application number: 96909095.0
(22) Date of filing: 03.04.1996
(51) Int. Cl.: A23L 3/3571

(54) **DEOXYGENATION OF A FOOD ITEM USING A LACCASE**
SAUERSTOFFENTFERNUNG AUS NAHRUNGSMITTEL MIT LACCASE
UTILISATION D'UNE LACCASE POUR DESOXYGENER UN PRODUIT ALIMENTAIRE

(30) Priority: 07.04.1995 DK 40095
(43) Date of publication of application: 21.01.1998
(73) Proprietor: Novozymes A/S, 2880 Bagsvaerd (DK)
(72) Inventor: PETERSEN, Bent, Riber, DK-1253 Koebenhavn K (DK); MATHIASEN, Thomas, Erik, DK-2100 Koebenhavn O (DK)
(86) International application number: DK9600161
(87) International publication number: WO96031133

(56) References cited:
- EP-A- 0 304 029
- DE-A- 3 204 284
- US-A- 5 180 672

## Description

### FIELD OF INVENTION

This invention relates to a simple and effective method of deoxygenating food items derived partly or wholly from extracts of plant materials. The food items may be juice, soup or concentrates.

### BACKGROUND OF THE INVENTION

Pasteurized and unpasteurized citrus juices lose some of their typical quality during processing and storage as a result of temperature, dissolved oxygen and storage time. The influence of oxygen on the quality of pasteurized citrus juices has been investigated extensively and it has been shown that oxygen takes part in the degradation of ascorbic acid and also affects browning of the juices. Oxygen has also a damaging effect on some of the aroma components and may decrease their strength (for reference see Journal of Food Processing and Preservation 14, 1990, pp. 253-256).

In the tomato industry the content of dissolved oxygen should also be minimized as oxygen may take part in a discolouring process of the tomato products, e.g., produce a "Black neck" in bottled catsup, which is a dark discolouration of the top layer presumably due to oxidation (for reference see "Tomato Production, Processing & Technology", 3rd Ed., CTI Publications Inc., p. 298 and p. 240).

Enzymatic deoxygenation with glucose oxidase has been described to reduce the amount of dissolved oxygen in juices significantly (for reference see Journal of Food Processing and Preservation 14, 1990, pp. 253-256). Glucose oxidase catalyzes the oxidation of d-glucose to d-gluconic acid in the presence of molecular oxygen: C₆H₁₂O₆ + 2O₂ + 2H₂O -> 2C₆H₁₂O₇ + 2H₂O₂. As it can be seen, a by product of this reaction is H₂O₂, which can be destructive to juice constituents. In order to avoid this problem it has been suggested to add a catalase together with the glucose oxidase; catalase catalyzes the reaction: 2H₂O₂ -> 2H₂O + O₂, but then oxygen is produced again! - however, the overall effect of the enzymatic deaeration by using a combination of glucose oxidase and a catalase is removal of 0.5 mole oxygen for each mole of oxidized d-glucose.

It is an object of the present invention to find a simple and effective enzyme system for oxygen removal in food items derived partly or wholly from extracts of plant materials. The food item may be a juice, a soup or a concentrate.

### SUMMARY OF THE INVENTION

It has surprisingly been found that laccases are very efficient in reducing the oxygen content in for example a tomato soup.

Accordingly, the present invention provides a method of deoxygenating a food item derived partly or wholly from an extract of a plant material, the method comprising adding an effective amount of a laccase to said food item and/or to said extract.

### BRIEF DESCRIPTION OF DRAWINGS

The present invention is further illustrated by reference to the accompanying drawings, in which

Fig. 1 shows the relation between % oxygen and time in a tomato soup which is first aerated whereafter a laccase is added, the experiment conducted as described in Example 1.

Fig. 2 shows the relation between % oxygen and time in a wheat gluten hydrolysate after a laccase is added, the experiment conducted as described in Example 2.

### DETAILED DISCLOSURE OF THE INVENTION

According to the present invention a food item may be deoxygenated by adding an effective amount of a laccase.

Preferred food items are those which are partly or wholly derived from an extract of a plant material.

According to the invention the food item may be anything eatable or drinkable comprising an extract of a plant material, e.g., a juice, a soup, or a concentrate. Concentrates may be in the form of a pulp, a puree, a catsup or a paste.

In the context of this invention an extract from a plant material is any substance which can be derived from plant material by extraction, processing or by other separation techniques.

The extract may be provided on the basis of frozen materials, heat treated materials, fresh materials, or provided in any other form known in the art. The extract may contain the plant material, e.g., the fruit, in the form as whole fruits, chopped fruits, or the fruits may be mashed, pulped or homogenized.

Useful extracts may also be in the form of hydrolysates, in particular protein hydrolysates; these protein hydrolysates may be prepared, e.g., as described in "Enzymic Hydrolysis of Food Proteins", written by Jens Adler-Nissen, Elsevier Applied Science Publishers LTD, 1986.

Examples of such protein hydrolysates are wheat gluten and maize gluten (corn gluten), wherein the wheat gluten is a highly valued functional protein and maize gluten, which is a by-product from the production of starch from maize, is a highly valued feed protein due to its content of xanthophyll.

Other examples of such protein hydrolysates are plant proteins derived from oilseeds or beans, e.g., cottonseed, peanuts, sesame, sunflower, rapeseed, or the Vicia faba bean (field bean, broad bean, horse bean, faba bean).

The plant protein may also be derived from potatoes; this protein is available in large quantities as a by-product from the production of potato starch, where it may be recovered by e.g. heat coagulation.

According to the present invention the plant material may be obtainable from e.g. fruits, vegetables, cereals, oilseeds or beans.

Useful fruits are, e.g., pome or seed fruits (apples, pears, etc.), grapes, tomatoes, citrus (orange, lemon, lime, mandarin), prunes, cherries, black currants, red currants, raspberries, strawberries, cranberries, pineapple, or any other tropical fruit.

Useful vegetables are, e.g., potatoes, carrots, celery, or onions.

Useful cereals are, e.g., wheat or maize.

Useful oilseeds are, e.g., cottonseed, peanuts, sesame, sunflower or rapeseed.

A useful bean may be the Vicia faba bean.

The plant material may also contain more than one fruit, or more than one vegetable, or more than one cereal, etc., or it may contain a mixture of, e.g., a fruit and a vegetable.

According to the present invention especially food items derived from tomatoes or citrus are preferred, in particular tomato products such as juices, soups or concentrates, and citrus products such as juices, in particular orange juice and lemon juice.

Food items such as juice, puree and catsup are defined and produced in a manner known per se, e.g., as defined by the Food & Drug Administration:
The Food & Drug Administration defines tomato juice, puree/pulp and catsup in the following way (for reference see "Tomato Production, Processing & Technology", 3rd Ed., CTI Publications Inc., Appendix B, Part 53):
   Tomato juice: Tomato juice is the unconcentrated liquid extracted from mature tomatoes of red or reddish varieties, with or without scalding followed by draining. In the extraction of such liquid, heat may be applied by any method which does not add water thereto. Such liquid is strained free from skins, seeds, and other coarse or hard substances, but carries finely divided insoluble solids from the flesh of the tomato. Such liquid may be homogenized, and may be seasoned with salt. When sealed in a container it is so processed by heat, before or after sealing.
   Tomato puree/pulp: Tomato puree, tomato pulp, is the food prepared from one or any combination of two or all of the following optional ingredient:
      (1) The liquid obtained from mature tomatoes of red or reddish varieties.
      (2) The liquid obtained from the residue from preparing such tomatoes for canning, consisting of peelings and cores with or without such tomatoes or pieces thereof.
      (3) The liquid obtained from the residue from partial extraction of juice from such tomatoes.
      (4) Salt.
   Catsup: Catsup, ketchup, catchup, is the food prepared from one or any combination of two or all of the following optional ingredient:
      (1) The liquid obtained from mature tomatoes of red or reddish varieties.
      (2) The liquid obtained from the residue from preparing such tomatoes for canning, consisting of peelings and cores with or without such tomatoes or pieces thereof.
      (3) The liquid obtained from the residue from partial extraction of juice from such tomatoes.

### Phenolic compounds

According to the present invention, depending on the food item in question, it may in some cases be an advantage also to add a phenolic compound, in which case the phenolic compound acts as a substrate for the laccase, thereby increasing the deoxygenation of said food item.

Phenolic compounds which may be used according to the invention, could be an anthocyanin or a spice such as paprika. Of course the phenolic compound used should be one normally allowable as a food ingredient.

### Laccase

Laccase (EC 1.10.3.2) is characterized by being a group of multi-copper proteins of low specificity acting on both o- and p-quinols, whereby oxygen is reduced to water.

According to the invention microbial laccase is preferred. The microbial laccase may be derived from bacteria or fungi (including filamentous fungi and yeasts). The microbial laccase is preferably obtained from a fungus.

Some preferred fungi include strains belonging to the subdivision Basidiomycotina and to the subdivision Ascomycotina. Suitable examples include a laccase derivable from a strain of Aspergillus, Neurospora, e.g., N. crassa, Podospora, Botrytis, Collybia, Fomes, Lentinus, Pleurotus, Trametes, e.g., T. villosa and T. versicolor, Rhizoctonia, e.g., R. solani, Coprinus, e.g., C. plicatilis and C. cinereus, Psatyrella, Myceliophthora, e.g., M. thermophila, Schytalidium, e.g., S. thermophilum, Polyporus, e.g., P. pinsitus, Phlebia, e.g., P. radita (WO 92/01046), Coriolus, e.g., C. hirsutus (JP 2-238885), Hygrophoropsis, Agaricus, Vascellum, Crucibulum, Myrothecium, or Sporormiella.

In particular laccases derivable from T. villosa, T.versicolor, M. thermophila or S. thermophilum are preferred.

The laccase may furthermore be one which is producible by a method comprising cultivating a host cell transformed with a recombinant DNA vector which carries a DNA sequence encoding said laccase as well as DNA sequences encoding functions permitting the expression of the DNA sequence encoding the laccase in a culture medium under conditions permitting the expression of the laccase and recovering the laccase from the culture.

### Determination of Laccase Activity (LACU)

Laccase activity is determined from the oxidation of 2,2'-azinobis(3-ethylbenzothiazoline-6-sulfonate) (ABTS) by oxygen. The greenish-blue colour produced is photometered at 418 nm. The analytical conditions are 1.67 mM ABTS, 0.1 M phosphate buffer, pH 7.0, 30°C, 3 minutes reaction.

1 laccase unit (LACU) is the amount of enzyme that catalyses the conversion of 1 µmole ABTS per minute at these conditions.

### Addition of Laccase

The food items according to this invention may be produced in the manner known per se.

According to the invention addition of laccase may take place at any step during the manufacture of said food item, often as the last or one of the last processing steps, but laccase may also be added as a prophylactic treatment at an earlier stage in order to remove any oxygen that may come into the food item during processing, or the laccase may be added twice: first as a prophylactic treatment and then in one of the last processing steps to ensure that any oxygen left in the food item is effectively removed.

The amount of laccase added will typically be in the range of from 0.01-100 LACU per g dry matter of the food item, preferably in the range of from 0.1-5 LACU per g dry matter of the food item.

The invention is further illustrated in the following examples which are not intended to be in any way limiting to the scope of the invention as claimed.

### EXAMPLE 1

### Deoxygenation of Tomato Soup with Laccase.

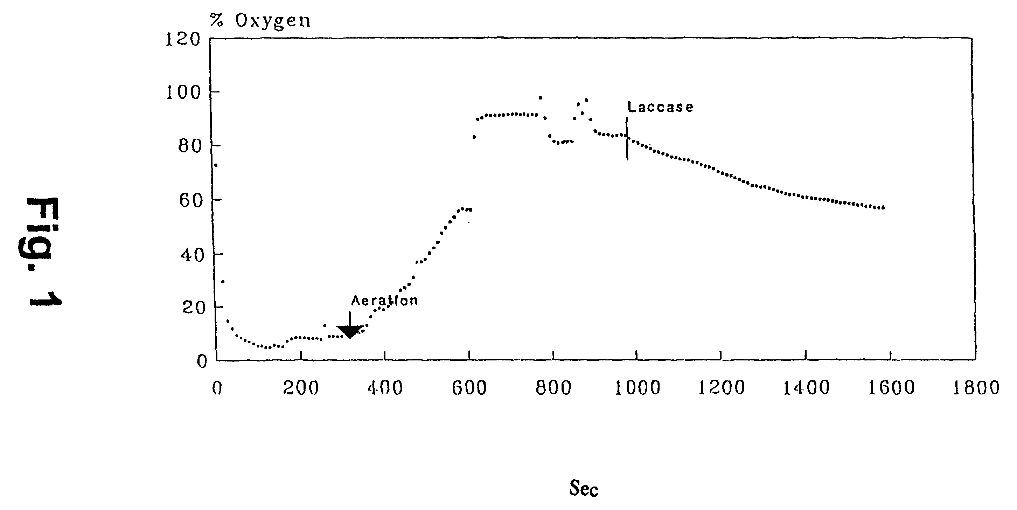

The percentage of oxygen in a commercially available tomato soup (Heinz) was measured by means of a Mettler Toledo Oxygen Electrode. The result is presented in Fig. 1.

It can be seen that the oxygen concentration in this soup was only a few per cent of saturation. The soup was then aerated for 10 minutes to a level of approximately 90% saturation (cf. Fig. 1).

A laccase (a Trametes villosa laccase available from Novo Nordisk A/S under the trade name SP 504) at a dosage of 3.5 LACU per g dry matter (soup) was now added under continuous stirring. Temperature was ambient (25°C) and pH was measured to 4.6.

As shown in Fig. 1 laccase is clearly able to deoxygenate the tomato product as the oxygen level is reduced from about 80% to about 60% in approximately 7 minutes.

### EXAMPLE 2

### Deoxygenation of a Solution of Wheat Gluten Hydrolysate.

30.36 g of wheat gluten hydrolysate was dissolved in 2.15 l of deionized water at 30.5°C. pH was adjusted to 4.5.

3 LACU of a laccase (a Trametes villosa laccase available from Novo Nordisk A/S under the trade name SP 504) per g of wheat gluten hydrolysate was added, and the oxygen concentration was followed for 40 minutes.

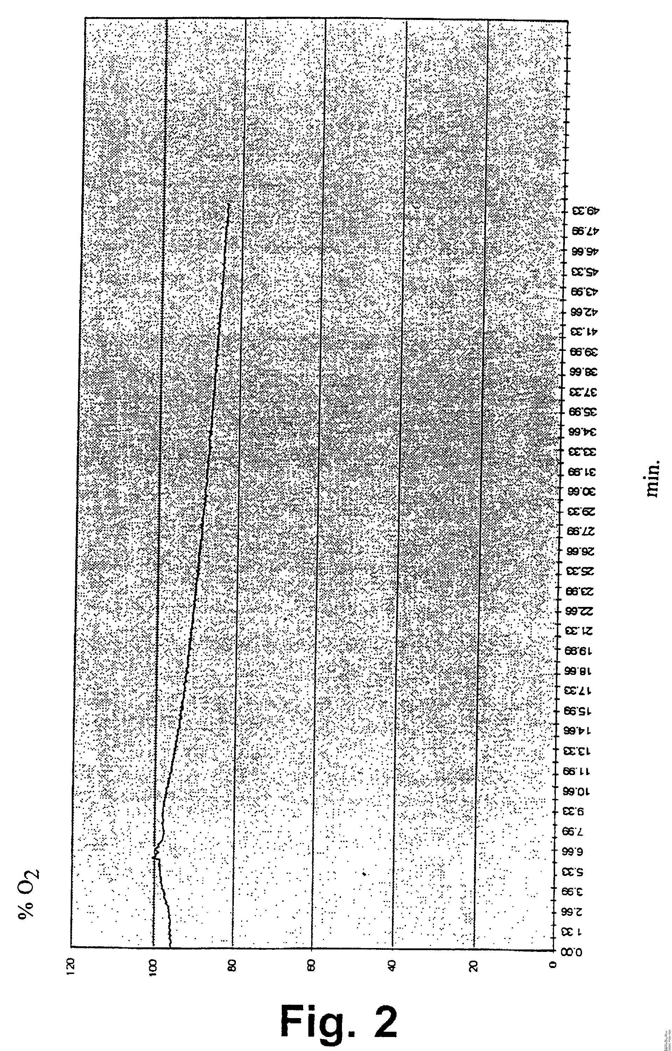

At 30.5°C the oxygen content in 2.15 1 of water is approximately 2.5 mmoles which was defined as 100%. The enclosed graph (Fig. 2) showing oxygen consumption versus time indicates a degree of deoxygenation corresponding to 0.000013 moles of O₂ per g of wheat gluten hydrolysate in 40 minutes.

## Claims

1. A method of reducing the oxygen content of a food item derived partly or wholly from an extract of a plant material, comprising adding an effective amount of a laccase to said food item and/or to said extract.

2. A method according to claim 1, wherein the food item is a juice, a soup or a concentrate.

3. A method according to claim 2, wherein the concentrate is a puree, a catsup or a paste.

4. A method according to claim 1, wherein the plant material is obtainable from fruits, vegetables or cereals.

5. A method according to claim 4, wherein the fruits are selected from the group consisting of apples, pears, citrus, tomatoes, grapes, black currants, red currants, raspberries, strawberries, cranberries, prunes, cherries and pineapple.

6. A method according to claim 5, wherein the citrus are selected from the group consisting of oranges, lemons, lime and mandarins.

7. A method according to claim 4, wherein the vegetables are selected from the group consisting of potatoes, carrots, celery and onions.

8. A method according to claim 4, wherein the cereals are selected from the group consisting of wheat and maize.

9. A method according to claim 1, wherein the extract is a protein hydrolysate.

10. A method according to claim 9, wherein the protein hydrolysate is derived from a cereal.

11. A method according to claim 1, wherein the laccase is a microbial laccase.

12. A method according to claim 11, wherein the microbial laccase is derivable from a fungus, in particular from a fungus belonging to the subdivision *Basidiomycotina* or to the subdivision *Ascomycotina.*

13. A method according to claim 12, wherein the microbial laccase is derivable from a strain of *Aspergillus, Neurospora, Podospora, Botrytis, Collybia, Fomes, Lentinus, Pleurotus, Trametes, Rhizoctonia, Coprinus, Psatyrella, Myceliophthora, Schytalidium, Polyporus, Phlebia, Coriolus, Hygrophoropsis, Agaricus, Vascellum, Crucibulum, Myrothecium,* or *Sporormiella.*

14. A method according to claim 13, wherein the microbial laccase is derivable from *T*. *villosa, T.versicolor, M. thermophila* or *S. thermophilum.*

15. A method according to any of claims 1-14, wherein the amount of laccase is in the range of from 0.01-100 LACU per g dry matter of the food item, preferably in the range of from 0.1-5 LACU per g dry matter of the food item.

16. A method according to claim 1, additionally adding a phenolic compound.

17. A method according to claim 5, wherein the fruits are selected from the group consisting of tomatoes and citrus.

## Patentansprüche

1. Verfahren zur Reduktion des Sauerstoffgehalts eines Nahrungsmittels, das teilweise oder vollständig von einem Extrakt eines Pflanzenmaterials abgeleitet ist, umfassend Hinzufügen einer wirksamen Menge einer Laccase zu dem Nahrungsmittel und/oder dem Extrakt.

2. Verfahren nach Anspruch 1, wobei das Nahrungsmittel ein Saft, eine Suppe oder ein Konzentrat ist.

3. Verfahren nach Anspruch 2, wobei das Konzentrat ein Püree, ein Ketschup oder eine Paste ist.

4. Verfahren nach Anspruch 1, wobei das Pflanzenmaterial aus Früchten, Gemüse oder Getreide erhältlich ist.

5. Verfahren nach Anspruch 4, wobei die Früchte ausgewählt sind aus der Gruppe bestehend aus Äpfeln, Birnen, Zitrusfrüchten, Tomaten, Trauben, schwarzen Johannisbeeren, roten Johannisbeeren, Himbeeren, Erdbeeren, Preiselbeeren, Zwetschgen, Kirschen und Ananas.

6. Verfahren nach Anspruch 5, wobei die Zitrusfrucht ausgewählt ist aus der Gruppe bestehend aus Orangen, Zitronen, Limonen und Mandarinen.

7. Verfahren nach Anspruch 4, wobei die Gemüse ausgewählt sind aus der Gruppe bestehend aus Kartoffeln, Karotten, Sellerie und Zwiebeln.

8. Verfahren nach Anspruch 4, wobei die Getreide ausgewählt sind aus der Gruppe bestehend aus Weizen und Mais.

9. Verfahren nach Anspruch 1, wobei der Extrakt ein Proteinhydrolysat ist.

10. Verfahren nach Anspruch 9, wobei das Proteinhydrolysat von einem Getreide abgeleitet ist.

11. Verfahren nach Anspruch 1, wobei die Laccase eine mikrobielle Laccase ist.

12. Verfahren nach Anspruch 11, wobei die mikrobielle Laccase erhältlich ist von einem Pilz, insbesondere von einem Pilz, der zu der Unterabteilung *Basidiomycotina* oder zu der Unterabteilung *Ascomycotina* gehört.

13. Verfahren nach Anspruch 12, wobei die mikrobielle Laccase erhältlich ist von einem Stamm von *Apergillus, Neurospora, Podospora, Botrytis, Collybia, Fomes, Lentinus, Pleurotus, Trametes, Rhizoctonia, Coprinus, Psatyrella, Myceliophthora, Schytalidium, Polyporus, Phlebia, Coriolus, Hygrophoropsis, Agaricus, Vascellum, Crucibulum, Myrothecium* oder *Sporormiella.*

14. Verfahren nach Anspruch 13, wobei die mikrobielle Laccase erhältlich ist von *T. villosa, T. versicolor, M. thermophila* oder *S. thermophilum.*

15. Verfahren nach einem der Ansprüche 1 bis 14, wobei die Menge an Laccase im Bereich von 0,01-100 LACU pro g Trockenmasse des Nahrungsmittels, vorzugsweise im Bereich von 0,1-5 LACU pro g Trockenmasse des Nahrungsmittels, liegt.

16. Verfahren nach Anspruch 1, wobei weiterhin ein phenolische Verbindung hinzugefügt wird.

17. Verfahren nach Anspruch 5, wobei die Früchte ausgewählt sind aus der Gruppe bestehend aus Tomaten und Zitrusfrüchten.

## Revendications

1. Procédé de réduction de la teneur en oxygène d'un article alimentaire dérivé partiellement ou totalement d'un extrait d'un matériel végétal, comportant l'ajout d'une quantité efficace d'une laccase audit article alimentaire et/ou audit extrait.

2. Procédé selon la revendication 1, dans lequel l'article alimentaire est un jus, une soupe ou un concentré.

3. Procédé selon la revendication 2, dans lequel le concentré est une purée, une sauce piquante ou une pâte.

4. Procédé selon la revendication 1, dans lequel le matériel végétal peut être obtenu à partir de fruits, de légumes ou de céréales.

5. Procédé selon la revendication 4, dans lequel les fruits sont sélectionnés parmi le groupe constitué de pommes, poires, d'agrumes, de tomates, de raisins, de cassis, de groseilles rouges, de framboises, de fraises, d'airelles, de prunes, de cerises et d'ananas.

6. Procédé selon la revendication 5, dans lequel les agrumes sont sélectionnés parmi le groupe constitué d'oranges, de citrons, de limes et de mandarines.

7. Procédé selon la revendication 4, dans lequel les légumes sont sélectionnés parmi le groupe constitué de pommes de terre, de carottes, de céleris et d'oignons.

8. Procédé selon la revendication 4, dans lequel les céréales sont sélectionnées parmi le groupe constitué de blé et de maïs.

9. Procédé selon la revendication 1, dans lequel l'extrait est un hydrolysat protéinique.

10. Procédé selon la revendication 9, dans lequel l'hydrolysat protéinique est dérivé d'une céréale.

11. Procédé selon la revendication 1, dans lequel la laccase est une laccase microbienne.

12. Procédé selon la revendication 11, dans lequel la laccase microbienne peut être dérivée d'un champignon, en particulier d'un champignon appartenant à la sous-division *Basidiomycotina* ou de la sous-division *Ascomycotina.*

13. Procédé selon la revendication 12, dans lequel la laccase microbienne peut être dérivée d'une souche de *Aspergillus, Neurospora, Podospora, Botrytis, Collybia, Fomes, Lentinus, Pleurotus, Trametes, Rhizoctonia, Coprinus, Psatyrella, Myceliophthora, Schytalidium, Polyporus, Phlebia, Coriolus, Hygrophoropsis, Agaricus, Vascellum, Crucibulum, Myrothecium,* ou *Sporormiella.*

14. Procédé selon la revendication 13, dans lequel la laccase microbienne peut être dérivée de *T. villosa, T. versicolor, M. thermophila* ou *S. thermophilum.*

15. Procédé selon l'une quelconque des revendications 1 à 14, dans lequel la quantité de laccase se trouve dans la plage allant de 0,01 à 100 LACU par g de matière sèche de l'article alimentaire, de préférence dans la plage allant de 0,1 à 5 LACU par g de matière sèche de l'article alimentaire.

16. Procédé selon la revendication 1, comportant de plus l'ajout d'un composé phénolique.

17. Procédé selon la revendication 5, dans lequel les fruits sont sélectionnés parmi le groupe constitué de tomates et d'agrumes.
